# EUROPÄISCHE PATENTSCHRIFT

(11) **EP 3 727 858 B1**
(45) Veröffentlichungstag und Bekanntmachung des Hinweises auf die Patenterteilung: **12.07.2023**
(21) Anmeldenummer: 18814641.9
(22) Anmeldetag: 12.12.2018
(51) Int. Cl.: B33Y 10/00, B33Y 70/00, C08F 2/48, C08F 283/00, C08F 290/06, C09D 175/14, C08L 75/14, C08G 18/81, C08G 18/40, C08G 18/32, C08F 220/34

(54) **ZWEIPHASEN-3D DRUCK-VERFAHREN**
TWO PHASE 3D PRINTING METHOD
PROCÉDÉ D'IMPRESSION TRIDIMENSIONNELLE EN DEUX PHASES

(30) Priorität: 21.12.2017 EP 17209426
(43) Veröffentlichungstag der Anmeldung: 28.10.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); WAGNER, Roland, 51375 Leverkusen (DE); STEMPFLE, Florian, Johannes, 50825 Köln (DE); TOMCZYK, Christoph, 51379 Leverkusen (DE)
(74) Vertreter: Davepon, Björn
(86) Internationale Anmeldenummer: PCT/EP2018/084573
(87) Internationale Veröffentlichungsnummer: WO 2019/121245

(56) Entgegenhaltungen:
- WO-A1-93/20993
- DE-A1- 19 948 591
- US-A- 5 573 721
- US-A1- 2015 072 293
- US-A1- 2016 200 044

## Beschreibung

Die vorliegende Erfindung betrifft ein Verfahren zur Herstellung eines Gegenstandes, umfassend die Schritte:
I) Abscheiden eines radikalisch vernetzten Harzes auf einem Träger (400), so dass eine Lage eines mit dem Träger (400) verbundenen Aufbaumaterials (600) erhalten wird, welche einem ersten ausgewählten Querschnitt des Gegenstandes entspricht;
II) Abscheiden eines radikalisch vernetzten Harzes auf eine zuvor abgeschiedene Lage des Aufbaumaterials (600), so dass eine weitere Lage des Aufbaumaterials (610) erhalten wird, welche einem weiteren ausgewählten Querschnitt des Gegenstandes entspricht und welche mit der zuvor aufgetragenen Lage (600) verbunden ist;
III) Wiederholen des Schritts II), bis der Gegenstand gebildet ist.

Die Erfindung betrifft weiterhin die Verwendung eines radikalisch vernetzbare Harzes, das ein Urethan(meth)acrylat umfasst, als Aufbaumaterial in einem Zweiphasen-Stereolithographie-Verfahren.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie dem Zerspanen. Bei letztgenanntem Verfahren wird ein Gegenstand so bearbeitet, dass er durch Wegnahme von Material seine Endgeometrie erhält.

Radikalisch härtbare Harze können in additiven Fertigungsverfahren eingesetzt werden. Beispiele für solche Verfahren sind Stereolithographie-Verfahren. US 2015/072293 A1 offenbart ein additives Fertigungsverfahren unter Verwendung eines Photopolymers, in dem photohärtbare Polyurethan-Zusammensetzungen als besonders geeignete Materialien angesehen werden. Solche Zusammensetzungen enthalten ein Polyurethan auf der Basis eines aliphatischen Diisocyanats, Poly(hexamethylenisophthalatglycol) und optional 1,4-Butandiol sowie einen polyfunktionellen Acrylatester, einen Photoinitiator und ein Antioxidans. Photohärtbare thermoplastische Polyurethanelastomere können photoreaktive Diacetylendiole als Kettenverlängerer enthalten.

US 2016/0200044 A1 betrifft ein 3D-Drucksystem umfassend eine Lichtquelle und wenigstens ein Kartuschengehäuse, wobei das Gehäuse eine Einfüllöffnung aufweist und weiterhin umfassend ein Harz, welches auf einer flüssigen Plattform aufschwimmt.

US 5,573,721 offenbart ein System zur Herstellung eines dreidimensionalen Objekts mit einem reaktiven und einem damit nicht mischbaren nicht-reaktiven flüssigen Medium. WO 93/20993 A1 beschreibt einen Stereolithographie-Prozess in einem geschlossenen Behälter unter Druck- und Temperaturerhöhung.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die speziellen Vorteile der Urethan(meth)acrylate zum Tragen kommen und welches gleichzeitig möglichst wenig exponiertes Aufbaumaterial benötigt.

Erfindungsgemäß gelöst wird die Aufgabe durch ein Verfahren gemäß Anspruch 1 und eine Verwendung gemäß Anspruch 14. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstandes umfasst die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Gegenstandes entspricht;
II) Abscheiden eines radikalisch vernetzten Harzes auf eine zuvor abgeschiedene Lage des Aufbaumaterials, so dass eine weitere Lage des Aufbaumaterials erhalten wird, welche einem weiteren ausgewählten Querschnitt des Gegenstandes entspricht und welche mit der zuvor aufgetragenen Lage verbunden ist;
III) Wiederholen des Schritts II), bis der Gegenstand gebildet ist;

wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt des Gegenstandes, erfolgt,
wobei der Träger innerhalb eines Behälters angeordnet ist, der Behälter das radikalisch vernetzbare Harz und eine nicht mit dem radikalisch vernetzbaren Harz mischbare Flüssigkeit enthält, welche eine höhere Dichte als das radikalisch vernetzbare Harz aufweist, so dass das radikalisch vernetzbare Harz auf der Flüssigkeit aufschwimmt und
wobei vor jedem Schritt II) der Abstand zwischen dem Träger und dem radikalisch vernetzbaren Harz derart verändert wird, dass sich über der in vertikaler Richtung gesehen obersten Oberfläche der zuvor abgeschiedenen Lage des Aufbaumaterials eine Schicht des radikalisch vernetzbaren Harzes bildet, welche diese oberste Oberfläche der zuvor abgeschiedenen Lage des Aufbaumaterials wenigstens teilweise kontaktiert.

Das radikalisch vernetzbare Harz umfasst ein Urethan(meth)acrylat.

Das erfindungsgemäße Verfahren kann als ein 3D-Druckverfahren angesehen werden, bei dem zwei flüssige Phasen vorliegen und das radikalisch vernetzbare Harz als eine Phase auf einer anderen Phase obenauf schwimmt. Somit kann ein Großteil des Volumens der im Behälter vorliegenden Flüssigkeiten durch inerte und kostengünstige Flüssigkeiten als untere Phase eingenommen werden.

Urethan(meth)acrylate zeichnen sich durch hervorragende Eigenschaften nach radikalischer Vernetzung aus. Leider weisen diese Verbindungen durch die hohe Konzentration von Urethangruppen besonders hohe Viskositäten auf, so dass sie in gebräuchlichen 3D-Druckverfahren nur in Kombination mit hohen Mengen an Reaktivverdünnern eingesetzt werden können, was über die hohe resultierende Doppelbindungsdichte der Formulierungen einen hohen Schrumpf der ausgehärteten Produkte verursacht, der zu signifikanten Abweichungen der Bauteile von den geplanten Bauteilgeometrien führt. Der Einsatz von Urethan(meth)acrylaten in dem erfindungsgemäßen Verfahren erlaubt es, mechanisch hochwertige Produkte mit geringem Reaktivverdünneranteil und geringem Schrumpf zu erzeugen.

Vorzugsweise enthält das radikalisch vernetzbare Harz photoaktivierbare Initiatoren wie beispielsweise Benzoinether, Benzoinmethylether, Benzoinisopropylether, substituierte Benzoinether wie Anisoinmethylether, Acetophenone, wie 2,2-Diethoxyacetophenon, substituierte Acetophenone wie 2,2- Diethoxyacetophenon, 2,2-Dimethoxy-2-Phenylacetophenon und 1-Phenyl-2-Hydroxy-2-Methyl-1- Propanon, substituierte alpha-Ketole, wie 2-Methyl-2-Hydroxypropiophenon, aromatische Sulphonylchloride und photoaktive Oxime wie 1-Phenyl-1,1-Propandion-2-(O-Ethoxycarbonyl) Oxim.

Es ist erfindungsgemäß vorgesehen, dass die Flüssigkeit und das radikalisch vernetzbare Harz nicht mischbar sind. "Nicht mischbar" bedeutet insbesondere, dass die Löslichkeit des radikalisch vernetzbaren Harzes in der Flüssigkeit bei 20 °C ≤ 10 g/L, vorzugsweise ≤ 1 g/L, mehr bevorzugt ≤ 0.1 g/L und besonders bevorzugt ≤ 0.01 g/L beträgt. Besonders geeignete Flüssigkeiten führen weiterhin zu keiner ungewollten Verfärbung des Gegenstandes und lassen den Gegenstand nur reversibel oder bevorzugt gar nicht aufquellen.

Es ist erfindungsgemäß weiterhin vorgesehen, dass das radikalisch vernetzbare Harz wenigstens eine isocyanatfunktionelle Verbindung umfasst, die wenigstens eine strahlenhärtende Gruppe ausgewählt aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist (Komponente A) und wenigstens eine NCO-reaktive Verbindung (Komponente B) umfasst.

Vorzugsweise enthält das radikalisch vernetzbare Harz zusätzlich dazu ein ungesättigtes Urethanacrylat, das keine Isocyanatgruppen trägt, (Komponente C) und wenigstens eine (Meth)Acrylatkomponente (Komponente D).

Die erfindungsgemäß einsetzbaren isocyanatfunktionellen Verbindungen sind beispielsweise aus Polyisocyanaten aufgebaut, wobei ein Teil der ursprünglich vorhandenen NCO-Gruppen mit hydroxyfunktionellen Verbindungen, die funktionelle Gruppen ausgewählt aus der Gruppe bestehend aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweisen, umgesetzt wurde, so dass das die isocyanatfunktionelle Verbindung Vinyl-, Propenyl-, Allyl-, Vinylether-, Maleinyl-, Fumaryl-, Maleinimid-, Dicyclopentadienyl-, Acrylamid- und/oder (Meth)Acrylat-Gruppen sowie Isocyanatgruppen trägt.

Als Polyisocyanate werden typischerweise aromatische, aliphatische und cycloaliphatische Polyisocyanate mit einem zahlenmittleren Molekulargewicht von unter 800 g/mol eingesetzt.

Beispielsweise geeignet sind Diisocyanate aus der Reihe 2,4-/2,6-Toluoldiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethylhexamethylendiisocyanat (THDI), Dodecamethylendiisocyanat, 1 ,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-l-methyl-l-isocyanatocyclohexan (MCI), 1,3-Diisooctylcyanato-4-methyl-cyclohexan, l,3-Diisocyanato-2-methyl-cyclohexan und α,α,α',α'-Tetramethyl-m- oder -p-xylylen-diisocyanat (TMXDI) sowie aus diesen Verbindungen bestehende Gemische. Bevorzugte Ausgangsstoffe für die Herstellung der isocyanatfunktionellen Verbindungen sind Hexamethylendiisocyanat (HDI), Isophorondiisocyanat (IPDI) und/oder 4,4'- Diisocyanatodicyclohexylmethan.

Ebenfalls geeignet als Polyisocyanate sind Umsetzungsprodukte der vorgenannten Isocyanate mit sich selbst oder untereinander zu Uretdionen, oder Isocyanuraten. Beispielhaft genannt seien Desmodur^{®} N3300, Desmodur^{®} N3400 oder Desmodur^{®} N3600 (alle Covestro AG, Leverkusen, DE). Weiterhin geeignet sind auch Derivate von Isocyanaten, wie Allophanate oder Biurete. Beispielhaft genannt seien Desmodur^{®} N100, Desmodur^{®} N75MPA/BA oder Desmodur^{®} VPLS2102 (alle Covestro AG, Leverkusen, DE).

Nach einer weiter bevorzugten Ausführungsform enthält die Komponente A) Uretdione, die mit der Komponente B) durch Umsetzung zu Urethanen, Allophanaten, Harnstoffen, Biureten, Thiourethanen, Thioallophanaten während und/oder nach Herstellung des Gegenstandes abreagieren können.

Nach einer weiteren bevorzugten Ausführungsform enthält die Komponente A) blockierte (bevorzugt abspalterfrei blockierte) Isocyanate, die mit der Komponente B) durch Umsetzung zu Urethanen, Allophanaten, Harnstoffen, Biureten, Thiourethanen, Thioallophanaten während und/oder nach Herstellung des Gegenstandes abreagieren können.

Beispiele hydroxylgruppenhaltiger Verbindungen, die strahlenhärtende Gruppen aufweisen, sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)acrylat (z.B. PEM63P, Laporte Performance Chemicals Ltd., UK), Poly(8-caprolacton)mono(meth)-acrylate wie z.B. Tone Ml 00^{®} (Dow, Schwalbach, DE), 2-Hydroxypropyl(meth)acrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ferner können als solche OH-funktionellen Verbindungen, die strahlenhärtende Gruppen aufweisen, auch die Umsetzungsprodukte von doppelbindungshaltigen Säuren mit gegebenenfalls doppelbindungshaltigen Epoxidverbindungen, wie die Umsetzungsprodukte von (Meth)Acrylsäure mit Glycidyl(meth)acrylat oder Bisphenol-A-diglycidylether, in der Urethanisierung eingesetzt werden.

Bevorzugt ist die isocyanatfunktionelle Verbindung, die wenigstens eine strahlenhärtende Gruppe ausgewählt aus der Gruppe bestehend aus Vinylether-, Maleinyl-, Fumaryl-, Maleinimid-, Dicyclopentadienyl-, Acrylamid-, (Meth)Acrylat-Gruppen oder einer Kombination aus mindestens zwei hiervon aufweist, ein isocyanatfunktionelles Urethanacrylat. Unter einem Urethanacrylat werden solche Verbindungen verstanden, die zumindest eine Isocyanatgruppe und wenigstens eine Acrylatgruppe pro Molekül aufweisen. Derartige Systeme sind an sich bekannt und besitzen die Eigenschaft, sowohl über eine NCO/OH Reaktion mit Polyolen oder Polyaminen, als auch über die Acrylatfunktion mittels UV-Licht oder Elektronenstrahlung radikalisch zu polymerisieren. Da zwei verschiedene Polymerisationsmechanismen bei diesen Verbindungen zum Tragen kommen werden Zusammensetzungen, die solche Verbindungen enthalten, auch als "dual-cure"-Systeme bezeichnet.

Die erfindungsgemäß einsetzbaren isocyanatfunktionellen Urethanacrylate sind beispielsweise aus Polyisocyanaten aufgebaut, wobei ein Teil der ursprünglich vorhandenen NCO-Gruppen mit hydroxyfunktionellen Acrylaten oder Methacrylaten umgesetzt wurde, sodass das Molekül endständige (Meth)Acrylatgruppen sowie Isocyanatgruppen trägt.

Dabei kommen als Ausgangsverbindung für isocyanatfunktionelle Urethanacrylate monomere Dioder Triisocyanate in Betracht. Beispiele für geeignete monomere Polyisocyanate sind 1,5-Naphthylendiisocyanat, 2,2'-, 2,4- und/oder 4,4'-Diphenylmethandiisocyanat (MDI), hydriertes MDI (H12MDI), Xylylendiisocyanat (XDI), Tetramethylxylylendiisocyanat (TMXDI), 4,4'-Diphenyldimethyl-methandiisocyanat, 4,4'-Dibenzyldiisocyanat, 1,3-Phenylendiisocyanat, 1,4-Phenylendiisocyanat, Toluylendiisocyanat (TDI), 1-Methyl-2,4-diisocyanato-cyclohexan, 1,6-Diisocyanato-2,2,4-trimethylhexan, 1 ,6-Diisocyanato-2,4,4-trimethylhexan, 1 -Isocyanatomethyl-3 - isocyanato-l,5,5-trimethylcyclohexan (IPDI), Tetramethoxybutan-l,4-diisocyanat, Hexan- 1,6-diisocyanat (HDI), Dicyclohexylmethandiisocyanat, Cyclohexan-1,4-diisocyanat, Ethylendiisocyanat, Trimethylhexamethylendiisocyanat, 1,4-Diisocyanatobutan, 1,12-Diisocyanatododecan, Dimerfettsäurediisocyanat, oder Uretdion-, Biuret- oder Isocyanurate von Diisocyanaten. Auch Isocyanat-Trimere können verwendet werden, wie sie beispielsweise in EP 1 002 818 B1 beschrieben sind.

Als hydroxyfunktionelle Acrylate oder Methacrylate kommen im Prinzip sämtliche denkbaren Verbindungen dieser Art zum Einsatz. Die Verbindungen enthalten mindestens einen einwertig Hydroxy-funktionellen Ester der (Meth)acrylsäure. Darunter sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3oder 4-Hydroxybutyl-(meth)acrylat als auch beliebige Gemische aus derartigen Verbindungen. Außerdem kommen auch einwertige (Meth)Acryloylgruppen aufweisende Alkohole oder im Wesentlichen aus derartigen Alkoholen bestehende Umsetzungsprodukte in Betracht, die durch Veresterung von n- wertigen Alkoholen mit (Meth)Acrylsäure erhalten werden, wobei als Alkohole auch Gemische von unterschiedlichen Alkoholen eingesetzt werden können, so dass n für eine ganze oder in statistische Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth)Acrylsäure im genannten Molverhältnis.

Zur Erzeugung erfindungsgemäß einsetzbarer Urethan(meth)acrylate ist es ebenso möglich, von einer polymeren Verbindung ausgewählt aus der Gruppe bestehend aus Polyester(meth)acrylaten, Polyether(meth)acrylaten, Polyetherester(meth)acrylaten, ungesättigten Polyestern mit Allyletherstruktureinheiten und Polyepoxy(meth)acrylaten auszugehen. Diese polymere Verbindung bildet das Polymerrückgrat und wird zur Erzeugung des Urethanacrylats mit Polyisocyanaten umgesetzt. Die Isocyanatgruppen der erhaltenen Urethanacrylate können dann gewünschtenfalls wiederum mit monomeren Verbindungen mit jeweils einer Hydroxyfunktion und mindestens einer (Meth)Acrylatgruppe umgesetzt werden, wodurch endständige Acrylatgruppen erzeugt werden. Wird nur ein Teil der Isocyanatgruppen umgesetzt, werden isocyanatfunktionelle Urethanacrylate erhalten. Werden die Isocyanatgruppen vollständig umgesetzt, wird ein ungesättigtes Urethanacrylat erzeugt.

In besonderer Ausgestaltung besitzt das isocyanatfunktionelle Urethanacrylat eine NCO-Funktionalität von 0,8 bis 6, bevorzugt 1 bis 4, weiter bevorzugt 1,2 bis 3, ganz besonders bevorzugt 1,5 bis 2,5 und insbesondere 2.

Was die Doppelbindungsfunktionalität des isocyanatfunktionellen Urethanacrylats betrifft, so kann diese über weite Bereiche variieren. Vorzugsweise beträgt die Doppelbindungsfunktionalität 0,5 bis 6, bevorzugt 1 bis 4, weiter bevorzugt 1,5 bis 3. Die Doppelbindungsfunktionalität definiert sich hierbei als statistische mittlere Anzahl an Doppelbindungen pro Molekül des isocyanatfunktionellen Urethanacrylats.

In weiter bevorzugter Weise weist das isocyanatfunktionelle Urethanacrylat ein mittleres Molekulargewicht von 150 bis 5000 auf, insbesondere von 300 bis 2500 g/mol.

Weiterhin enthält diese Harzzusammensetzung wenigstens eine NCO-reaktive Verbindung (Komponente B). Zu diesem Zweck kann jedes Polyol eingesetzt werden, das im Stand der Technik beispielsweise zur Herstellung von Polyurethanpolymeren bekannt ist. Hierfür kommen insbesondere Polyetherpolyole, Polyesterpolyole, Polyetherpolyesterpolyole, Polycarbonatpolyole, Polyestercarbonatpolyole oder Polyethercarbonatpolyole in Frage. Weitere Beispiele sind aliphatische Alkohole und Polyole mit 1-6 OH-Gruppen pro Molekül und 2 bis etwa 30 C-Atomen. Geeignete aliphatische Polyole sind beispielsweise Ethylenglykol, Propandiol-1,2 oder -1,3, Butandiol-1,4, Butandiol-1,3, Butandiol-2,3, Butendiol-1,4, Pentandiol-1,5, Pentendiole, Hexandiol-1,6, Octandiol-1,8, Dodecandiol und höhere Homologe, Isomere und Gemische solcher Verbindungen. Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylen- oder Propylenoxid. Weiterhin können die Umsetzungsprodukte niedermolekularer, polyfunktioneller Alkohole mit Alkylenoxiden, sogenannte Polyetherpolyole, eingesetzt werden. Die Alkylenoxide weisen vorzugsweise zwei bis etwa vier C-Atome auf. Geeignet sind beispielsweise die Umsetzungsprodukte von Ethylenglykol, Propylenglykol, Glycerin, Trimethylolethan oder Trimethylolpropan, Pentaerythrit mit Ethylenoxid, Propylenoxid oder Butylenoxid oder Gemischen davon. Die genannten Alkohole können dabei selber auch "dual- funktional" sein, d.h. somit auch ungesättigte Doppelbindungen und Hydroxygruppen aufweisen, wobei die Doppelbindung z.B. durch teilweise Veresterung mit Acrylsäure oder Umsetzung mit Di- oder Polyisocyanaten und weitere Umsetzung - wie oben beschrieben - mit hydroxyfunktionellen Doppelbindungsträgern erhalten werden können. Das Molekulargewicht der Polyole kann über weite Bereiche variieren. Vorzugsweise liegt das Molekulargewicht (Mn) der Polyole bei etwa 50 bis 5000 g/mol (zahlenmittleres Molekulargewicht, Mn, wie durch GPC bestimmbar), insbesondere von 150 bis 2500 g/mol. Solche Polyole sind dem Fachmann bekannt und kommerziell erhältlich.

Insbesondere zeichnet sich das Polyol durch eine OH-Funktionalität von 1 bis 6 aus, bevorzugt 1,5 bis 5, weiter bevorzugt 1,7 bis 4, besonders bevorzugt 1,8 bis 3,5 und ganz besonders bevorzugt 2.

Die NCO-reaktive Verbindung (Komponente B) kann auch ein Thiol, Amin, Epoxid oder deren Mischungen sein.

Das ungesättigte Urethanacrylat (Komponente C) unterscheidet sich von dem isocyanatfunktionellen Urethanacrylat darin, dass es keine freien NCO-Gruppen trägt. Die erfindungsgemäß eingesetzten ungesättigten Urethanacrylate sind, wie auch die isocyanatfunktionellen Urethanacrylate, aus einem polyfunktionellen Isocyanat aufgebaut, wobei in Falle der ungesättigten Urethanacrylate sämtliche der Isocyanatgruppen mit einem hydroxyfunktionellen Acrylat oder Methacrylat umgesetzt sind. Auch die vorstehend bei den isocyanatfunktionellen Urethanacrylaten beschriebene Alternative mit einem polymeren Backbone aus Polyester(meth)acrylaten, Polyether(meth)acrylaten, Polyetherester(meth)acrylaten, ungesättigten Polyestern mit Allyletherstruktureinheiten und Polyepoxy(meth)acrylaten kann zur Anwendung kommen.

Was die für die ungesättigten Urethanacrylate einsetzbaren polyfunktionellen Isocyanate betrifft, so kommen hierfür grundsätzlich dieselben Verbindungen in Frage, die vorstehend zu den isocyanatfunktionellen Urethanacrylaten angegeben sind. Vorzugsweise sind die polyfunktionellen Isocyanate für die ungesättigten Urethanacrylate aus den aliphatischen polyfunktionellen Isocyanaten ausgewählt. Mit anderen Worten ist also ein ungesättigtes aliphatisches Urethanacrylat als Komponente C) bevorzugt. Diese Verbindungen sind besonders bevorzugt, weil sie die Flexibilität der erfindungsgemäß verwendeten Zusammensetzung nach dem Aushärten verbessern.

In weiterer Ausgestaltung der Erfindung weist das ungesättigte Urethanacrylat einen Anteil an OH-Gruppen auf. Die OH-Funktionalität ist in der Regel gering und kann beispielsweise 0,01 bis 1 betragen, bevorzugt 0,05 bis 0,8, weiter bevorzugt 0,08 bis 0,6, ganz besonders bevorzugt 0,09 bis 0,5 und insbesondere 0,1. Diese OH-Gruppen stehen ebenfalls für eine Reaktion mit NCO-Gruppen zur Verfügung.

In weiter bevorzugter Weise weist das ungesättigte Urethanacrylat ein mittleres Molekulargewicht von 200 bis 3000 auf, insbesondere von 300 bis 2000.

Die Doppelbindungsfunktionalität des ungesättigten Urethanacrylats kann über weite Bereiche variieren. Vorzugsweise beträgt die Doppelbindungsfunktionalität 1 bis 6, bevorzugt 2 bis 5 weiter bevorzugt 2,5 bis 4. Die Doppelbindungsfunktionalität definiert sich hierbei als statistische mittlere Anzahl an Doppelbindungen pro Molekül des ungesättigten Urethanacrylats.

Die (Meth)Acrylatkomponente (Komponente D) kann aus aliphatischen und/oder aromatischen Methacrylaten ausgewählt sein. Einsetzbare Alkyl(meth)acrylate sind beispielsweise lineare oder verzweigte monofunktionale ungesättigte (Meth)Acrylate nicht tertiärer Alkylalkohole, deren Alkylgruppen 4 bis 14 und insbesondere 4 bis 12 Kohlenstoffatome aufweisen. Beispiele solch niederer Alkylacrylate sind n-Butyl, n-Pentyl, n-Hexyl, Cyclohexyl, Isoheptyl, n-Nonyl, n-Decyl, Isohexyl, Isobornyl, 2-Ethyloctyl, Isooctyl, 2-Ethylhexyl, Tetrahydrofurfuryl, Ethoxyethoxyethyl, Phenoxyethyl, Cyclo-Trimethlypropan, 3,3,5-Trimethylcyclohexyl, t-Butylcyclohexyl, t-Butylacrylate und -methacrylate. Bevorzugte Alkylacrylate sind Isooctylacrylat, 2-Ethylhexylacrylat, 2- Ethyloctylacrylat, n-Butylacrylat, Tetrahydrofurfurylacrylat, Isobornylacrylat, Ethoxyethoxyethylacrylat, Phenoxyethylacrylat, 3,3,5-Trimethylcyclohexylacrylat sowie Cyclohexylacrylat.

Als thermisch aktivierbare Initiatoren kommen organische Peroxide in Betracht, wie Ditertiärbutylperoxid, Benzoylperoxid und Laurylperoxid, sowie 2,2'-Azobis(isobutyronitril). Die Einsatzmengen der vorgenannten Initiatoren sind dem Fachmann grundsätzlich bekannt und betragen beispielsweise etwa 0,01 bis 8 Gew.-%, insbesondere 0,5 bis 5 Gew.-%, bevorzugt 1 bis 3 Gew.-%.

Weiterhin kann die Zusammensetzung noch übliche Additive beinhalten. Hierfür kommen beispielsweise dem Fachmann bekannte Füllstoffe, Stabilisatoren, insbesondere UV-Stabilisatoren, Fungizide, Farbstoffe, Pigmente, Polymerisationskatalysatoren, Weichmacher und Lösungsmittel in Betracht. Als Polymerisationskatalysator können beispielsweise an sich bekannte Isocyanatadditionskatalysatoren verwendet werden, wie z. B Triethylamin, 1,4-Diazabicyclo-[2,2,2]-Oktan, Zinndioktoat, Dibutylzinndilaurat oder Bismuthoctoat.

Nach einer besonders bevorzugten Ausführungsform enthält das radikalisch vernetzbare Harz die Komponenten in den folgenden Mengen, wobei sich die Angaben in Gewichts-% zu 100 Gewichtes-% addieren:
Komponente A) 10 bis 79,9 Gew.-%, insbesondere 15 bis 75 Gew.-%,
Komponente B) 20 bis 89,9 Gew.-%, insbesondere 25 bis 85 Gew.-%,
Komponente C) 0 bis 50 Gew.-%, insbesondere 15 bis 30 Gew.-%,
Komponente D) 0 bis 35 Gew.-%, insbesondere 10 bis 25 Gew.-%

Die Verwendung von Konzepten der Dual Cure-Chemie, bevorzugt in Gegenwart von Isocyanaten, erlaubt es darüber hinaus, die mechanischen Eigenschaften der Bauteile nach einem nachgeschalteten Wärmehärtungsprozess nochmal zu verbessern bei gleichzeitiger Verringerung des Bauteilschrumpfs. Gemäß einer weiteren bevorzugten Ausführungsform wird daher der gebildete Gegenstand auf ≥ 25 °C (bevorzugt ≥ 50 °C, mehr bevorzugt ≥ 75 °C) erwärmt.

In einer weiteren bevorzugten Ausführungsform ist die nicht mit dem radikalisch vernetzbaren Harz mischbare Flüssigkeit ausgewählt aus: Silikonöle, halogenierte Kohlenwasserstoffe, Polyethylenwachse, Wasser, Salzwasser, Glycerin, Metallschmelzen, ionische Flüssigkeiten und Mischungen der genannten Flüssigkeiten. Im Fall des Salzwassers ist eine gesättigte NaCl-Lösung bevorzugt.

In einer weiteren bevorzugten Ausführungsform erfolgt das Abscheiden des radikalisch vernetzten Harzes wenigstens in Schritt II) mittels UV-Licht. Geeignet ist insbesondere UV-Licht mit einer Wellenlänge von ≥ 250 nm und ≤ 420 nm, besonders geeignet von ≥ 300 nm und ≤ 400 nm.

In einer weiteren bevorzugten Ausführungsform wird vor jedem Schritt II) der Träger in vertikaler Richtung gesehen abgesenkt und die vertikale Position des radikalisch vernetzbaren Harzes bleibt konstant. Gemäß dieser Ausführungsform macht man sich die höhere Präzision beim Verfahren des Trägers gegenüber einer Veränderung des Flüssigkeitsspiegels im Behälter zunutze.

In einer weiteren bevorzugten Ausführungsform wird die nicht mit dem radikalisch vernetzbaren Harz mischbare Flüssigkeit auf eine Temperatur von ≥ 25 °C (bevorzugt ≥ 50 °C, mehr bevorzugt ≥ 75 °C) beheizt. Dieses hat den Vorteil, dass die Viskosität des Harzes reduziert werden kann und dass im bereits vorliegenden radikalisch vernetzten Harz Nachreaktionen schneller ablaufen können.

In einer weiteren bevorzugten Ausführungsform herrscht in der nicht mit dem radikalisch vernetzbaren Harz mischbaren Flüssigkeit in vertikaler Richtung gesehen ein Temperaturgradient, wobei die Temperatur in vertikaler Richtung gesehen nach unten hin abnimmt. Somit kann das Harz auf eine niedrigere Viskosität gebracht werden und bereits vernetztes Harz kann bei niedrigerer Temperatur formstabil gehalten werden.

In einer weiteren bevorzugten Ausführungsform wird vor jedem Schritt II) der durch Abscheiden des radikalisch vernetzten Harzes dem radikalisch vernetzbaren Harz entnommene Anteil wieder hinzugefügt. Auf diese Weise wird immer eine konstante Harzmenge bereitgestellt.

In einer weiteren bevorzugten Ausführungsform wird die Menge an radikalisch vernetzbaren Harzes zu Beginn des Verfahrens derart bereitgestellt, dass sie dem Volumen des herzustellenden Gegenstandes plus einem Aufschlag von ≤ 10% entspricht und dass während des Verfahrens kein neues Harz hinzugefügt wird. Vorzugsweise beträgt dieser Aufschlag ≤ 5% und mehr bevorzugt ≤ 2%. Auf diese Weise kann die nach Beendigung des Verfahrens verbleibende Restmenge an Harz, welche als Abfall entsorgt werden müsste, minimiert werden.

In einer weiteren bevorzugten Ausführungsform wird die Schichtdicke des radikalisch vernetzten Harzes über die Vertikalverschiebung des Trägers von Schicht zu Schicht variabel eingestellt.

In einer weiteren bevorzugten Ausführungsform wird zur Härtung eingesetzte UV-Strahlung mittels mindestens eines Beamers als Bild auf die Oberfläche des Harzes projiziert, bevorzugt mit der Oberfläche der letzten radikalisch vernetzten Harzschicht als Fokusebene.

In einer weiteren bevorzugten Ausführungsform wird zur Härtung eingesetzte UV-Strahlung mittels mindestens eines Lasers auf die Oberfläche des Harzes geschrieben, bevorzugt mit der letzten radikalisch vernetzten Harzschicht als Fokusebene.

In einer weiteren bevorzugten Ausführungsform ist das radikalisch vernetzbare Harz bei 23°C ein Feststoff und wird während des Verfahrens soweit erwärmt, dass es eine Viskosität (DIN EN ISO 2884-1) von ≤ 100000 mPas (vorzugsweise ≤ 10000 mPas, mehr bevorzugt ≤ 1000 mPas) aufweist.

Die Erfindung betrifft weiterhin die Verwendung eines radikalisch vernetzbaren Harzes, das ein Urethan(meth)acrylat umfasst, als Aufbaumaterial in einem Zweiphasen-3D Druck-Verfahren. Das radikalisch vernetzbare Harz umfasst wenigstens eine isocyanatfunktionelle Verbindung, die wenigstens eine strahlenhärtende Gruppe ausgewählt aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist (Komponente A) und wenigstens eine NCO-reaktive Verbindung (Komponente B) umfasst.

Bevorzugte Urethan(meth)acrylate wurden bereits im Zusammenhang mit dem erfindungsgemäßen Verfahren geschildert.

Die Erfindung wird anhand der nachfolgenden Figuren weiter erläutert, ohne jedoch darauf beschränkt zu sein. Es zeigen:
FIG. 1 einen Schritt während des erfindungsgemäßen Verfahrens
FIG. 2 einen weiteren Schritt während des erfindungsgemäßen Verfahrens

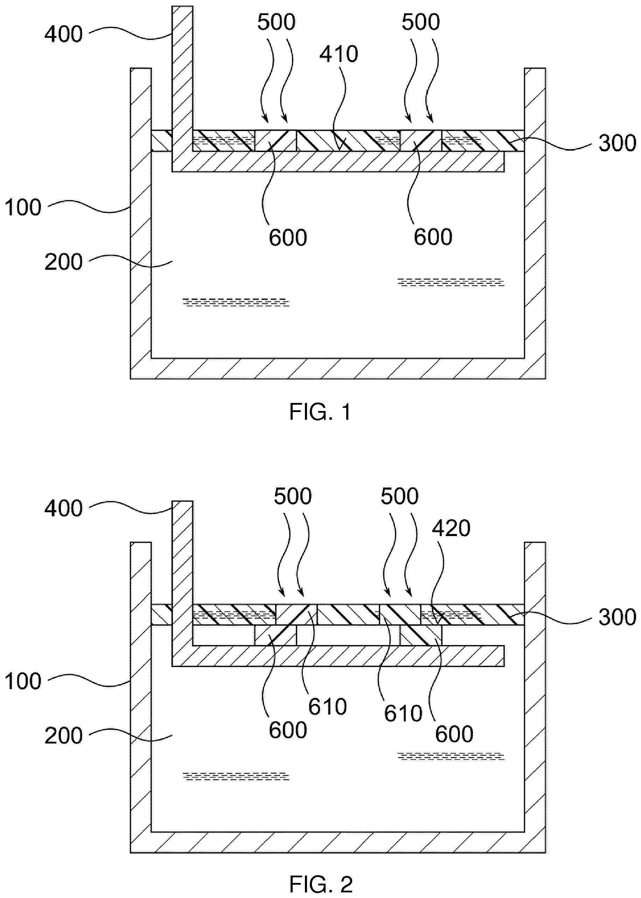

FIG. 1 zeigt Schritt I) zu Beginn des erfindungsgemäßen Verfahrens. Im Behälter 100 liegt die Flüssigkeit 200 vor, auf der das radikalisch vernetzbare, ein Urethan(meth)acrylat umfassende Harz 300 wegen der geringeren Dichte obenauf schwimmt. Die parallel verlaufenden, gestrichelten Linien in den Figuren deuten an, dass sich die Flüssigkeit 200 und das Harz 300 im flüssigen Zustand befinden.

Der Träger 400 ist so weit in den Behälter 100 abgesenkt worden, dass dessen vertikaler Richtung gesehen oberste Oberfläche 410 die Schicht des Harzes 300 von unten kontaktiert. Gemäß dem ersten Querschnitt des aufzubauenden Gegenstandes wird die Schicht des Harzes 300 mit Laserlicht 500 belichtet, so dass die erste Lage des Aufbaumaterials 600 erhalten wird. Diese ist mit dem Träger 400 verbunden.

FIG. 2 zeigt den ersten Schritt II), der nach Schritt I) des erfindungsgemäßen Verfahrens durchgeführt wird. Zuvor wurde der Träger 400 nach unten verfahren, so dass sich über der in vertikaler Richtung gesehen obersten Oberfläche 420 der zuvor abgeschiedenen Lage des Aufbaumaterials 600 eine Schicht des radikalisch vernetzbaren Harzes 300 bildet, welche diese oberste Oberfläche 420 der zuvor abgeschiedenen Lage des Aufbaumaterials 600 von unten kontaktiert. Der Verlust an Harz durch Bildung des Aufbaumaterials wurde durch in den Figuren nicht gezeichnete Leitungen und Dosierpumpen ausgeglichen, so dass vor jedem Schritt II) die gleiche Menge an Harz vorliegt. Die vertikale Position des Harzes 300 blieb dabei unverändert. Der Verfahrweg und somit die Auflösung des herzustellenden Gegenstandes in vertikaler (z-) Richtung kann beispielsweise 100 µm, 10 µm oder 1 µm betragen. Gemäß dem nächsten Querschnitt des aufzubauenden Gegenstandes wird die Schicht des Harzes 300 mit Laserlicht 500 belichtet, so dass die nächste Lage des Aufbaumaterials 610 erhalten wird. Diese ist mit der vorigen Lage 600 verbunden. Dieser Vorgang wird so lange wiederholt, bis der Gegenstand erhalten wird.

## Patentansprüche

1. Verfahren zur Herstellung eines Gegenstandes, umfassend die Schritte:
I) Abscheiden eines radikalisch vernetzten Harzes auf einem Träger (400), so dass eine Lage eines mit dem Träger (400) verbundenen Aufbaumaterials (600) erhalten wird, welche einem ersten ausgewählten Querschnitt des Gegenstandes entspricht;
II) Abscheiden eines radikalisch vernetzten Harzes auf eine zuvor abgeschiedene Lage des Aufbaumaterials (600), so dass eine weitere Lage des Aufbaumaterials (610) erhalten wird, welche einem weiteren ausgewählten Querschnitt des Gegenstandes entspricht und welche mit der zuvor aufgetragenen Lage (600) verbunden ist;
III) Wiederholen des Schritts II), bis der Gegenstand gebildet ist;
wobei das Abscheiden eines radikalisch vernetzten Harzes wenigstens in Schritt II) durch Belichten und/oder Bestrahlen (500) eines ausgewählten Bereichs eines radikalisch vernetzbaren Harzes (300), entsprechend dem jeweils ausgewählten Querschnitt des Gegenstandes, erfolgt,
wobei der Träger (400) innerhalb eines Behälters (100) angeordnet ist, der Behälter das radikalisch vernetzbare Harz (300) und eine nicht mit dem radikalisch vernetzbaren Harz (300) mischbare Flüssigkeit (200) enthält, welche eine höhere Dichte als das radikalisch vernetzbare Harz (300) aufweist, so dass das radikalisch vernetzbare Harz (300) auf der Flüssigkeit (200) aufschwimmt und
wobei vor jedem Schritt II) der Abstand zwischen dem Träger (400) und dem radikalisch vernetzbaren Harz (300) derart verändert wird, dass sich über der in vertikaler Richtung gesehen obersten Oberfläche (420) der zuvor abgeschiedenen Lage des Aufbaumaterials (600) eine Schicht des radikalisch vernetzbaren Harzes bildet, welche diese oberste Oberfläche (420) der zuvor abgeschiedenen Lage des Aufbaumaterials (600) wenigstens teilweise kontaktiert,
wobei das radikalisch vernetzbare Harz (300) ein Urethan(meth)acrylat umfasst,
**dadurch gekennzeichnet, dass** das radikalisch vernetzbare Harz (300) wenigstens eine isocyanatfunktionelle Verbindung umfasst, die wenigstens eine strahlenhärtende Gruppe ausgewählt aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist (Komponente A) und wenigstens eine NCO-reaktive Verbindung (Komponente B) umfasst.

2. Verfahren gemäß Anspruch, **dadurch gekennzeichnet, dass** der gebildete Gegenstand weiterhin auf eine Temperatur von ≥ 25 °C erwärmt wird.

3. Verfahren gemäß Anspruch 1 oder 2, **dadurch gekennzeichnet, dass** die nicht mit dem radikalisch vernetzbaren Harz (300) mischbare Flüssigkeit (200) ausgewählt ist aus: Silikonöle, halogenierte Kohlenwasserstoffe, Polyethylenwachse, Wasser, Salzwasser, Glycerin, Metallschmelzen, ionische Flüssigkeiten und Mischungen der genannten Flüssigkeiten.

4. Verfahren gemäß einem der Ansprüche 1 bis 3, **dadurch gekennzeichnet, dass** das Abscheiden des radikalisch vernetzten Harzes wenigstens in Schritt II) mittels UV-Licht erfolgt.

5. Verfahren gemäß einem der Ansprüche 1 bis 4, **dadurch gekennzeichnet, dass** vor jedem Schritt II) der Träger (400) in vertikaler Richtung gesehen abgesenkt wird und die vertikale Position des radikalisch vernetzbaren Harzes (300) konstant bleibt.

6. Verfahren gemäß einem der Ansprüche 1 bis 5, **dadurch gekennzeichnet, dass** die nicht mit dem radikalisch vernetzbaren Harz (300) mischbare Flüssigkeit (200) auf eine Temperatur von ≥ 25 °C beheizt wird.

7. Verfahren gemäß einem der Ansprüche 1 bis 6, **dadurch gekennzeichnet, dass** in der nicht mit dem radikalisch vernetzbaren Harz (300) mischbaren Flüssigkeit (200) in vertikaler Richtung gesehen ein Temperaturgradient herrscht, wobei die Temperatur in vertikaler Richtung gesehen nach unten hin abnimmt.

8. Verfahren gemäß einem der Ansprüche 1 bis 7, **dadurch gekennzeichnet, dass** vor jedem Schritt II) der durch Abscheiden des radikalisch vernetzten Harzes dem radikalisch vernetzbaren Harz (300) entnommene Anteil wieder hinzugefügt wird.

9. Verfahren gemäß einem der Ansprüche 1 bis 8, **dadurch gekennzeichnet, dass** die Menge an radikalisch vernetzbaren Harzes (300) zu Beginn des Verfahrens derart bereitgestellt wird, dass sie dem Volumen des herzustellenden Gegenstandes plus einem Aufschlag von ≤ 10% entspricht und dass während des Verfahrens kein neues Harz (300) hinzugefügt wird.

10. Verfahren gemäß einem der Ansprüche 1 bis 9, **dadurch gekennzeichnet, dass** die Schichtdicke des radikalisch vernetzten Harzes über die Vertikalverschiebung des Trägers (400) im von Schicht zu Schicht variabel eingestellt wird.

11. Verfahren gemäß einem der Ansprüche 1 bis 10, **dadurch gekennzeichnet, dass** zur Härtung eingesetzte UV-Strahlung mittels mindestens eines Beamers als Bild auf die Oberfläche des Harzes projiziert wird.

12. Verfahren gemäß einem der Ansprüche 1 bis 10, **dadurch gekennzeichnet, dass** zur Härtung eingesetzte UV-Strahlung mittels mindestens eines Lasers auf die Oberfläche des Harzes geschrieben wird.

13. Verfahren gemäß einem der Ansprüche 1 bis 12, **dadurch gekennzeichnet, dass** das radikalisch vernetzbare Harz (300) bei 23°C ein Feststoff ist und während des Verfahrens soweit erwärmt wird, dass es eine Viskosität (DIN EN ISO 2884-1) von ≤ 100000 mPas aufweist.

14. Verwendung eines radikalisch vernetzbare Harzes, das ein Urethan(meth)acrylat umfasst, als Aufbaumaterial in einem Zweiphasen-3D Druck-Verfahren, **dadurch gekennzeichnet, dass** das radikalisch vernetzbare Harz wenigstens eine isocyanatfunktionelle Verbindung umfasst, die wenigstens eine strahlenhärtende Gruppe ausgewählt aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist (Komponente A) und wenigstens eine NCO-reaktive Verbindung (Komponente B) umfasst.

## Claims

1. Process for producing an article comprising the steps of:
I) depositing a free-radically crosslinked resin on a carrier (400) to obtain a ply of a construction material (600) joined to the carrier (400) which corresponds to a first selected cross section of the article;
II) depositing a free-radically crosslinked resin on a previously deposited ply of the construction material (600) to obtain a further ply of the construction material (610) which corresponds to a further selected cross section of the article and is joined to the previously applied ply (600);
III) repeating step II) until the article has been formed;
wherein the depositing of a free-radically crosslinked resin at least in step II) is carried out by illumination and/or irradiation (500) of a selected region of a free-radically crosslinkable resin (300) according to the particular selected cross section of the article,
wherein the carrier (400) is arranged inside a container (100) and the container contains the free-radically crosslinkable resin (300) and a liquid (200) immiscible with the free-radically crosslinkable resin (300) which has a higher density than the free-radically crosslinkable resin (300), thus causing the free-radically crosslinkable resin (300) to float on the liquid (200) and
wherein before each step II) the distance between the carrier (400) and the free-radically crosslinkable resin (300) is altered such that a layer of the free-radically crosslinkable resin forms above the vertically uppermost surface (420) of the previously deposited ply of the construction material (600) and at least partially contacts this uppermost surface (420) of the previously deposited ply of the construction material (600),
wherein the free-radically crosslinkable resin (300) comprises a urethane (meth)acrylate,
**characterized in that** the free-radically crosslinkable resin (300) comprises at least one isocyanate-functional compound which comprises at least one radiation-curable group selected from vinyl, propenyl, allyl, vinyl ether, maleyl, fumaryl, maleimide, dicyclopentadienyl, acrylamide and (meth)acrylate groups or a combination of at least two of these (component A) and comprises at least one NCO-reactive compound (component B).

2. Process according to Claim, **characterized in that** the article formed is further heated to a temperature of ≥ 25°C.

3. Process according to Claim 1 or 2, **characterized in that** the liquid (200) immiscible with the free-radically crosslinkable resin (300) is selected from: silicone oils, halogenated hydrocarbons, polyethylene waxes, water, saltwater, glycerol, metal melts, ionic liquids and mixtures of the recited liquids.

4. Process according to any of Claims 1 to 3, **characterized in that** at least in step II) the depositing of the free-radically crosslinked resin is carried out using UV light.

5. Process according to any of Claims 1 to 4, **characterized in that** before every step II) the carrier (400) is vertically lowered and the vertical position of the free-radically crosslinkable resin (300) remains constant.

6. Process according to any of Claims 1 to 5, **characterized in that** the liquid (200) immiscible with the free-radically crosslinkable resin (300) is heated to a temperature of ≥ 25°C.

7. Process according to any of Claims 1 to 6, **characterized in that** a vertical temperature gradient prevails in the liquid (200) immiscible with the free-radically crosslinkable resin (300), wherein the temperature decreases vertically downward.

8. Process according to any of Claims 1 to 7, **characterized in that** before every step II) the proportion withdrawn from the free-radically crosslinkable resin (300) by deposition of the radically crosslinked resin is re-added.

9. Process according to any of Claims 1 to 8, **characterized in that** the amount of free-radically crosslinkable resin (300) is provided at commencement of the process in such a way that it corresponds to the volume of the article to be produced plus an addition of ≤ 10% and that no new resin (300) is added during the process.

10. Process according to any of Claims 1 to 9, **characterized in that** the layer thickness of the free-radically crosslinked resin is varied from layer to layer through the vertical displacement of the carrier (400).

11. Process according to any of Claims 1 to 10, **characterized in that** UV radiation employed for curing is projected onto the surface of the resin as an image by means of at least one projector.

12. Process according to any of Claims 1 to 10, **characterized in that** UV radiation employed for curing is inscribed onto the surface of the resin by means of at least one laser.

13. Process according to any of Claims 1 to 12, **characterized in that** the free-radically crosslinkable resin (300) is a solid at 23°C and during the process is heated to an extent such that it has a viscosity (DIN EN ISO 2884-1) of ≤ 100000 mPas.

14. Use of a free-radically crosslinkable resin comprising a urethane (meth)acrylate as a construction material in a two-phase 3-D printing process, **characterized in that** the free-radically crosslinkable resin comprises at least one isocyanate-functional compound which comprises at least one radiation-curable group selected from vinyl, propenyl, allyl, vinyl ether, maleyl, fumaryl, maleimide, dicyclopentadienyl, acrylamide and (meth)acrylate groups or a combination of at least two of these (component A) and comprises at least one NCO-reactive compound (component B).

## Revendications

1. Procédé de fabrication d'un objet, comprenant les étapes suivantes :
I) le dépôt d'une résine réticulée par voie radicalaire sur un support (400) de manière à obtenir une couche d'un matériau de construction (600) liée au support (400), qui correspond à une première section transversale sélectionnée de l'objet ;
II) le dépôt d'une résine réticulée par voie radicalaire sur une couche du matériau de construction (600) précédemment déposée, de manière à obtenir une autre couche du matériau de construction (610), qui correspond à une autre section transversale sélectionnée de l'objet et qui est liée à la couche (600) précédemment appliquée ;
III) la répétition de l'étape II) jusqu'à ce que l'objet soit formé ;
le dépôt d'une résine réticulée par voie radicalaire au moins dans l'étape II) étant effectué par exposition à de la lumière et/ou par exposition à un rayonnement (500) d'une zone sélectionnée d'une résine réticulable par voie radicalaire (300), correspondant à la section transversale sélectionnée respective de l'objet,
le support (400) étant agencé à l'intérieur d'un récipient (100), le récipient contenant la résine réticulable par voie radicalaire (300) et un liquide (200) non miscible avec la résine réticulable par voie radicalaire (300), qui présente une densité supérieure à celle de la résine réticulable par voie radicalaire (300), de telle sorte que la résine réticulable par voie radicalaire (300) flotte sur le liquide (200), et
avant chaque étape II), la distance entre le support (400) et la résine réticulable par voie radicalaire (300) étant modifiée de telle sorte qu'une couche de la résine réticulable par voie radicalaire se forme sur la surface la plus supérieure (420), vue dans la direction verticale, de la couche précédemment déposée du matériau de construction (600), laquelle entre au moins partiellement en contact avec cette surface la plus supérieure (420) de la couche précédemment déposée du matériau de construction (600),
la résine réticulable par voie radicalaire (300) comprenant un (méth)acrylate d'uréthane,
**caractérisé en ce que** la résine réticulable par voie radicalaire (300) comprend au moins un composé à fonction isocyanate qui comprend au moins un groupe durcissant par rayonnement choisi parmi les groupes vinyle, propényle, allyle, éther de vinyle, maléinyle, fumaryle, maléinimide, dicyclopentadiényle, acrylamide et (méth)acrylate ou une combinaison d'au moins deux d'entre eux (composant A) et au moins un composé réactif avec les NCO (composant B).

2. Procédé selon la revendication 3, **caractérisé en ce que** l'objet formé est en outre chauffé à une température ≥ 25 °C.

3. Procédé selon la revendication 1 ou 2, **caractérisé en ce que** le liquide (200) non miscible avec la résine réticulable par voie radicalaire (300) est choisi parmi : les huiles de silicone, les hydrocarbures halogénés, les cires de polyéthylène, l'eau, l'eau salée, la glycérine, les masses fondues de métaux, les liquides ioniques et des mélanges des liquides mentionnés.

4. Procédé selon l'une quelconque des revendications 1 à 3, **caractérisé en ce que** le dépôt de la résine réticulée par voie radicalaire est effectué au moins à l'étape II) au moyen de lumière UV.

5. Procédé selon l'une quelconque des revendications 1 à 4, **caractérisé en ce qu'**avant chaque étape II), le support (400) est abaissé en direction verticale et la position verticale de la résine réticulable par voie radicalaire (300) reste constante.

6. Procédé selon l'une quelconque des revendications 1 à 5, **caractérisé en ce que** le liquide (200) non miscible avec la résine réticulable par voie radicalaire (300) est chauffé à une température ≥ 25 °C.

7. Procédé selon l'une quelconque des revendications 1 à 6, **caractérisé en ce qu'**un gradient de température règne dans le liquide (200) non miscible avec la résine réticulable par voie radicalaire (300) dans la direction verticale, la température diminuant vers le bas dans la direction verticale.

8. Procédé selon l'une quelconque des revendications 1 à 7, **caractérisé en ce qu'**avant chaque étape II), la fraction prélevée sur la résine réticulable par voie radicalaire (300) par dépôt de la résine réticulée par voie radicalaire est de nouveau ajoutée.

9. Procédé selon l'une quelconque des revendications 1 à 8, **caractérisé en ce que** la quantité de résine réticulable par voie radicalaire (300) est fournie au début du procédé de manière à correspondre au volume de l'objet à fabriquer plus une majoration de ≤ 10 % et **en ce qu'**aucune nouvelle résine (300) n'est ajoutée pendant le procédé.

10. Procédé selon l'une quelconque des revendications 1 à 9, **caractérisé en ce que** l'épaisseur de couche de la résine réticulée par voie radicalaire est ajustée de manière variable d'une couche à l'autre par le déplacement vertical du support (400).

11. Procédé selon l'une quelconque des revendications 1 à 10, **caractérisé en ce que** le rayonnement UV utilisé pour le durcissement est projeté sous forme d'image sur la surface de la résine au moyen d'au moins un projecteur.

12. Procédé selon l'une quelconque des revendications 1 à 10, **caractérisé en ce que** le rayonnement UV utilisé pour le durcissement est écrit sur la surface de la résine au moyen d'au moins un laser.

13. Procédé selon l'une quelconque des revendications 1 à 12, **caractérisé en ce que** la résine réticulable par voie radicalaire (300) est un solide à 23 °C et est chauffée pendant le procédé jusqu'à ce qu'elle présente une viscosité (DIN EN ISO 2884-1) ≤ 100 000 mPas.

14. Utilisation d'une résine réticulable par voie radicalaire, qui comprend un (méth)acrylate d'uréthane, en tant que matériau de construction dans un procédé d'impression 3D en deux phases, **caractérisée en ce que** la résine réticulable par voie radicalaire comprend au moins un composé à fonction isocyanate qui comprend au moins un groupe durcissant par rayonnement choisi parmi les groupes vinyle, propényle, allyle, éther vinylique, maléinyle, fumaryle, maléinimide, dicyclopentadiényle, acrylonide et (méth)acrylate ou une combinaison d'au moins deux d'entre eux (composant A) et au moins un composé réactif avec les NCO (composant B).
